# FASCICULE DE BREVET EUROPEEN

(11) **EP 1 153 369 B1**
(45) Date de publication et mention de la délivrance du brevet: **23.03.2005**
(21) Numéro de dépôt: 00902697.2
(22) Date de dépôt: 31.01.2000
(51) Int. Cl.: G07C 9/00

(54) **PROCEDE DE DETECTION D'OBJETS PORTABLES ET SYSTEME DE MISE EN OEUVRE**
VERFAHREN ZUR DETEKTION VON TRAGBAREN OBJEKTEN UND DURCHFÜHRUNGSYSTEM
METHOD FOR DETECTING PORTABLE OBJECTS AND SYSTEM FOR CARRYING OUT SAID METHOD

(30) Priorité: 09.02.1999 FR 9901521
(43) Date de publication de la demande: 14.11.2001
(73) Titulaire: Gemplus, 13881 Gémenos Cedex (FR)
(72) Inventeur: PORTE, Philippe, F-13090 Aix-en-Provence (FR); MESSLEM, Omar, F-13120 Gardanne (FR); PRACA, Denis, F-13080 Luynes (FR)
(86) Numéro de dépôt international: PCT/FR2000/000230
(87) Numéro de publication internationale: WO 2000/048134

(56) Documents cités:
- EP-A- 0 543 500
- EP-A- 0 575 753
- EP-A- 0 632 420
- EP-A- 0 716 399
- WO-A-98/16849
- WO-A-98/38600

## Description

L'invention concerne un procédé de détection d'objets portables à partir d'un réseau de N antennes et un système de détection mettant en oeuvre ledit procédé.

Dans toute la suite on entend par antenne l'antenne elle-même mais aussi l'électronique d'émission-réception de signaux associée à ladite antenne.

On entend par objet portable tout support d'information de type carte à puce muni d'une antenne, ou toute étiquette électronique.

Généralement des antennes sont mises en réseau lorsque l'organe de gestion en charge d'une prise de décision doit être centralisé. C'est par exemple le cas lorsque l'on cherche à faire un contrôle d'accès physique pour un immeuble d'habitation, ou un contrôle d'accès dans le cas d'un bâtiment public. C'est aussi le cas lorsque l'on désire pouvoir garder la trace d'un objet dans une base de donnée.

La mise en réseau des antennes permet de ne pas dupliquer l'intelligence dans le système et permet de diminuer les coûts de l'installation. On utilisera donc à cette fin, un système de gestion comportant un organe pour la gestion centralisée du réseau.

Une telle organisation n'est pas sans difficultés. En effet, la centralisation de l'intelligence du système génère des problèmes liés en particulier au mode de fonctionnement de l'organe de gestion.

Actuellement, la mise en réseau de N antennes est gérée par un algorithme de scrutation qui sélectionne successivement les antennes pour vérifier la présence d'un objet portable. L'inconvénient majeur de cette solution est qu'une antenne est sélectionnée même si aucun objet portable ne lui est présenté. Cela engendre donc une perte de temps proportionnelle au nombre d'antennes du réseau, et empêche l'organe de gestion de se consacrer à d'autres tâches.

Dans le cas où plusieurs objets portables seraient détectés par une même antenne, l'organe de gestion gère cette situation au moyen d'un algorithme d'anticollision afin de sélectionner les objets portables qui auront été détectés par cette antenne, les uns après les autres.

Lorsque l'organe a fini de communiquer avec les objets portables par l'intermédiaire de cette antenne et lorsqu'il a réglé les phénomènes de collision sur cette antenne, il passe à une autre antenne.

Ainsi, si on considère un réseau de 60 antennes par exemple, le temps minimum permettant de détecter un objet portable devant une antenne étant de 25 millisecondes, chaque antenne est interrogée toutes les 1,6 secondes (64 x 25 millisecondes).

Dans le cas où un tel système est utilisé en contrôle d'accès, un usager doit attendre jusqu'à 1,6 secondes avant d'obtenir une réponse du système de détection.

La centralisation de l'organe de gestion génère donc des problèmes notamment les problèmes énumérés ci-dessous :
- une augmentation de la complexité du système due à la gestion de la scrutation ;
- le temps de réaction allongé par la scrutation des antennes,
- l'installation complexe car l'organe de gestion doit connaître la configuration du réseau,
- les antennes sont interrogées même si aucun objet n'est présenté,
- le nombre d'antennes du système est limité par le temps de scrutation.

La présente invention a pour but de remédier à ces problèmes.

L'invention a pour premier objet un procédé de détection d'objets portables permettant de gérer un nombre important d'antennes de manière transparente pour l'organe de gestion.

Selon l'invention, l'organe de gestion doit en outre être muni d'un moyen de sélection successive de chaque objet portable détecté par les antennes, ce moyen étant constitué de préférence par un algorithme d'anticollision qui peut être classique en soi.

L'invention a plus particulièrement pour objet un procédé de détection d'objets portables à partir d'un réseau de N antennes, piloté par un organe de gestion centralisé, principalement caractérisé en ce qu'il comporte les étapes suivantes :
- émission par l'organe de gestion de signaux simultanément vers toutes les antennes,
- réception par ledit organe d'un signal résultant comprenant des signaux réponse des antennes ayant détecté un objet portable,
- sélection successive de chaque objet détecté à partir de ce signal résultant, selon une séquence préétablie.

Selon une autre caractéristique, la sélection successive de chaque objet est réalisée par la mise en oeuvre d'un algorithme d'anticollision

Selon une variante, la réception du signal résultant par l'organe de gestion est obtenue par réception des signaux réponse des antennes respectivement sur le point d'entrée de l'organe réservé à chaque antenne et sommation desdits signaux.

Selon une autre variante, la réception d'un signal résultant par l'organe de gestion est obtenue par réception dudit signal résultant en un point d'entrée de l'organe réservé à l'ensemble des antennes du réseau.

Selon une variante, la réception du signal résultant comporte une étape d'identification de l'origine des signaux réponse formant ledit signal résultant.

L'identification d'un signal réponse comporte une étape de mémorisation de l'identification de l'antenne correspondante connue par le point d'entrée sur lequel est reçu le signal réponse.

Dans une variante, la mémorisation consiste à positionner une bascule dans un état logique et à la désactiver lorsque l'organe est entré en communication avec l'objet portable détecté par l'antenne correspondante.

Dans une autre variante, l'identification d'un signal réponse comporte une étape de concaténation de l'identification de l'antenne dans le signal réponse émis par l'antenne.

Un autre objet de la présente invention consiste en un système de détection d'objets portables comportant un réseau de N antennes associé à des moyens d'émission-réception et un organe de gestion centralisé, principalement caractérisé en ce que :
. l'organe de gestion comporte :
   - des moyens d'émission-réception reliés aux moyens d'émission-réception des antennes,
   - les moyens d'émission de l'organe de gestion étant aptes à émettre des signaux simultanément vers toutes les antennes,
   - et les moyens de réception dudit organe étant aptes à recevoir les signaux réponse des antennes qui ont détecté un objet portable, sous la forme de signaux distincts pour chaque antenne ou d'un signal résultant, selon le type de liaison établie entre les moyens d'émission-réception de l'organe de gestion et les antennes, et,
   - des moyens pour sélectionner successivement chaque objet portable détecté selon une séquence préétablie.

Les moyens pour sélectionner successivement chaque objet portable détecté selon une séquence préétablie comportent un algorithme d'anticollision.

Selon un mode de réalisation, les moyens d'émission-réception de l'organe de gestion et les moyens d'émission-réception des antennes sont reliés en point à point par des liaisons de type transmission série.

Selon un autre mode de réalisation, les moyens d'émission-réception de l'organe de gestion comportent un point d'entrée relié à toutes les antennes par une liaison de type transmission série.

Dans le cas du premier mode de réalisation, l'organe de gestion comporte un discriminateur d'antenne.

D'autres particularités et avantages de l'invention apparaîtront clairement à la lecture de la description qui est faite ci-après en regard des dessins sur lesquels :
- la figure 1, représente le schéma de principe de l'invention,
- la figure 2, représente un schéma de principe selon une variante de l'invention.
- la figure 3, représente un premier mode de réalisation de l'invention,
- la figure 4, représente un deuxième mode de réalisation de l'invention, et
- la figure 5, représente un troisième mode de réalisation de l'invention.

Selon le procédé de l'invention, l'organe de gestion OG est apte à envoyer simultanément sur toutes les antennes des signaux qu'il émet et, à recevoir l'ensemble de réponses desdites antennes sous forme d'un signal résultant S.

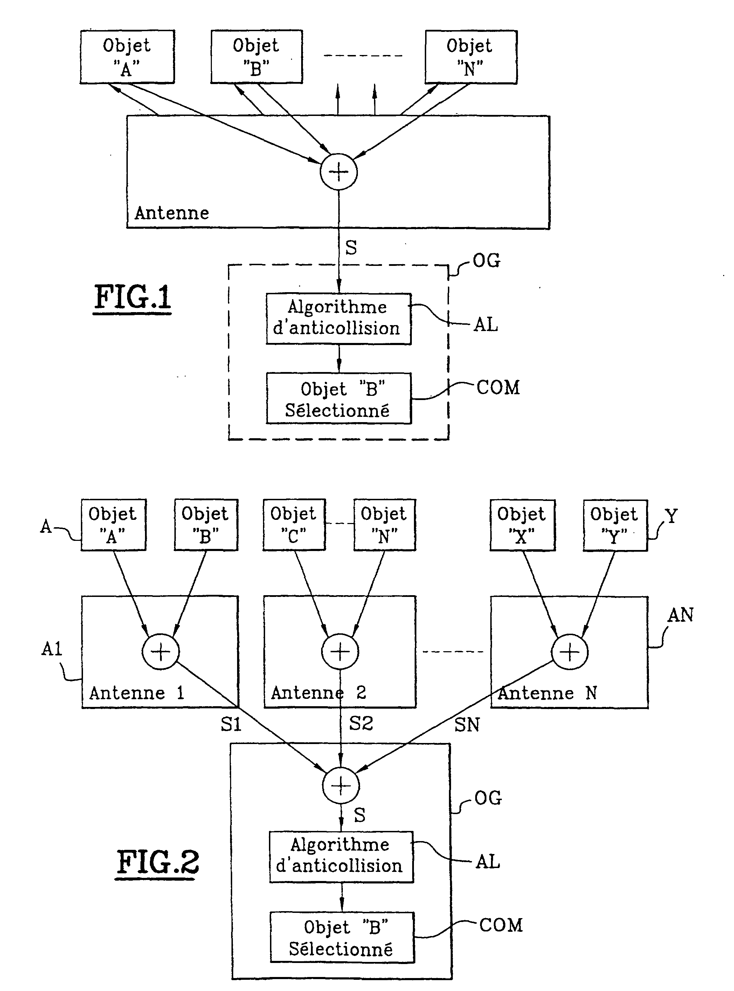

Ainsi, l'ensemble des antennes est vu par cet organe de gestion OG comme une seule entité comme le symbolise cette figure 1.

L'organe de gestion OG est apte également à sélectionner successivement les objets portables détectés par lesdites antennes pour communiquer avec eux (fonction portant la référence COM), cette sélection se faisant selon une séquence préétablie.

De manière pratique, la sélection successive sera réalisée par un algorithme d'anticollision AL quel qu'il soit.

L'algorithme d'anticollision AL permet de détecter un objet portable parmi Q présentés à N antennes.

Il existe de nombreux algorithmes d'anticollision permettant d'effectuer une sélection selon une séquence préétablie. Cette séquence peut gérer par exemple un degré de priorité, c'est-à-dire qu'elle permettra dans ce cas d'établir la communication avec l'objet portable qui se présentera à l'antenne la plus prioritaire parmi les N antennes ayant détecté un objet portable.

L'algorithme peut également permettre la communication entre l'organe de gestion et un objet portable en fonction d'un numéro d'ordre donné de façon arbitraire aux antennes et défini par la configuration du système.

La figure 2 illustre une variante du procédé selon l'invention.

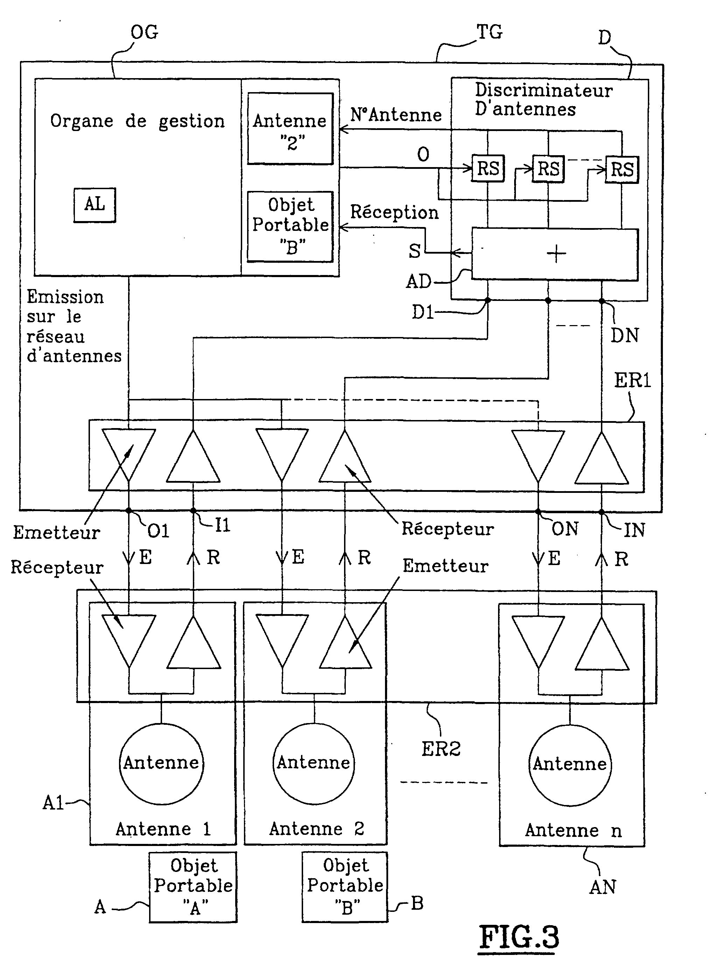

Dans cette variante on prévoit que chaque antenne de A1 à AN est susceptible de détecter un ou plusieurs objets. Cette variante ne change en rien le principe de l'invention. On prévoit en outre que la liaison entre les antennes et l'organe de gestion est de type point à point comme on le verra de façon plus détaillée à propos de la figure 3.

A cette fin l'organe de gestion réalise une somme des signaux entrants de façon à voir l'ensemble du réseau d'antennes comme une seule entité. Cet organe reçoit l'ensemble des réponses S1, S2 à SN des antennes qui auront détecté la présence d'un ou de plusieurs objets portables chacune et forme un signal résultant S. L'algorithme d'anticollision va permettre à l'organe de gérer l'arrivée simultanée des réponses du réseau d'antennes.

L'avantage de l'invention est que la notion de scrutation de l'état de la technique disparaît complètement.

De ce fait, le temps requis pour établir la communication avec un objet portable présenté devant une antenne quelconque ne dépend plus du nombre d'antennes présentes sur le réseau, mais uniquement du nombre objets portables présentés simultanément et de la performance de l'algorithme d'anticollision.

Un autre avantage conséquent de cette invention concerne la possibilité de gérer des priorités. La notion de priorité est valable à la fois pour la sélection d'une antenne et pour celle d'un objet portable.

Enfin, cette solution n'impose pas la multiplication du nombre d'organes de gestion pour garantir les performances d'un système de détection en réseau d'antennes.

On va maintenant décrire trois modes de réalisation correspondant à des systèmes de mise en oeuvre ayant des configurations différentes et susceptibles de répondre à des applications qui peuvent être différentes.

Le premier mode de réalisation est représenté sur la figure 3.

Dans ce mode, on a un système en liaison avec le réseau d'antennes en point à point. La liaison peut être une liaison RS485 ou RS422 ou RS232 ou autre.

Le système de gestion TG comporte l'organe de gestion à proprement parler OG muni de l'intelligence permettant de traiter et d'analyser les informations reçues des objets portables. L'organe de gestion interroge simultanément toutes les antennes du réseau pour détecter la présence d'un objet portable. Ceci est symbolisé par l'ensemble des signaux E émis aux sorties O1-ON par le dispositif d'émission-réception ER1 du système de gestion TG.

Les réponses reçues du réseau d'antennes sont symbolisées par les signaux R provenant des circuits d'émission-réception ER2 du réseau d'antennes et arrivant aux entrées I1-IN.

Bien entendu, chaque antenne a son propre circuit d'émission-réception, même si cela est représenté ici de façon schématique sous la forme d'un bloc, ce bloc illustrant l'équipement complet du réseau d'antennes.

Lorsqu'un objet portable A ou B est présent sur l'une quelconque des antennes, l'information est remontée vers l'organe de gestion via un dispositif D de discrimination d'antennes qui reçoit l'ensemble des signaux réponses desdites antennes par les points d'entrée D1 à DN.

Le rôle de ce dispositif D est de collecter cet ensemble d'informations issues des antennes et de transmettre un signal résultant S à l'organe de gestion en lui permettant d'en connaître l'origine.

Dans l'exemple illustré sur cette figure 3 l'antenne A2 a détecté un objet portable B qui a été sélectionné par l'algorithme d'anticollision AL.

De manière pratique, le dispositif de discrimination d'antennes D comporte une logique câblée comprenant par exemple un ensemble de bascules RS et un dispositif additionneur AD. Une bascule RS est affectée à chaque antenne du réseau.

Si en réponse à l'émission simultanée de signaux vers le réseau d'antennes plusieurs antennes envoient un signal retour de détection d'objets portables, les bascules RS affectées à ces antennes sont mises à 1, ce qui permet d'identifier l'origine du signal retour, c'est-à-dire l'antenne qui a émis ce signal.

Le discriminateur D permet par conséquent de donner le numéro d'identification de l'antenne à l'organe de gestion qui va entrer en communication avec l'objet portable détecté par ladite antenne.

L'organe de gestion va entrer en communication avec un objet portable sélectionné et remettre à 0 l'état de la bascule RS correspondant à l'antenne qui a détecté cet objet portable.

Ce mode de réalisation est particulièrement adapté à des applications telles que le contrôle d'accès dans un immeuble comportant des portes d'entrée à contrôler et à gérer et, la gestion des droits attribués aux différents individus entrant dans cet immeuble. Ce mode de réalisation permet en effet de gérer des priorités selon les portes d'entrée et les droits attribués aux personnes entrant.

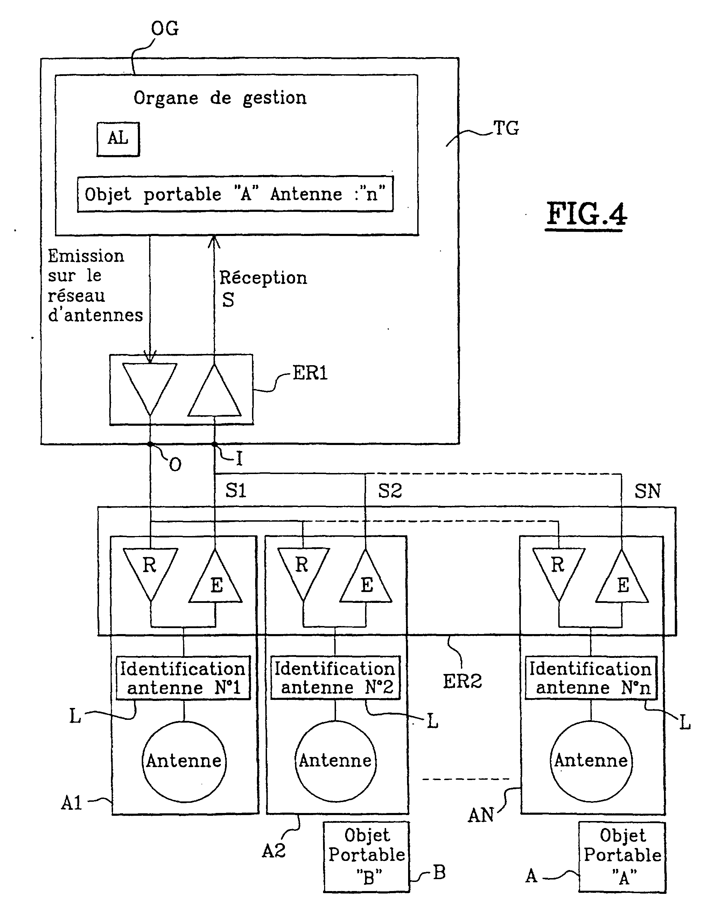

On va maintenant décrire le deuxième mode de réalisation illustré par le schéma de la figure 4.

Dans ce mode de réalisation la liaison entre organe de gestion et le réseau d'antennes est par exemple réalisée par un bus I2C. L'équipement émission - réception ER1 est de type à collecteur ouvert pour superposer tous les signaux réponse S1-SN arrivant au point d'entrée I du système de gestion TG.

L'organe de gestion OG est également muni d'un algorithme d'anticollision AL et d'une intelligence permettant de traiter et d'analyser les informations reçues des objets portables.

Comme dans le cas précédent l'organe de gestion permet d'interroger simultanément toutes les antennes du réseau à partir de son point de sorite O, pour détecter la présence d'un objet portable.

Ce mode de réalisation permet également d'identifier les antennes du réseau.

Une autre différence par rapport au mode de réalisation qui vient d'être décrit à propos de la figure 3, est que l'identification de l'antenne est réalisée par une logique L, classique en soi, placée dans chaque antenne.

Dans le cas de ce deuxième mode de réalisation l'algorithme d'anticollision est mis en oeuvre par l'organe de gestion dès réception sur son port d'entrée d'un signal retour reçu par le système émission-réception ER1.

L'équipement ER1 permet dans ce cas de fournir le signal résultant S à l'organe de gestion.

En effet, selon les technologies des équipements on peut avoir un seul port d'entrée I au niveau de l'organe de gestion relié par une liaison de type transmission série à l'ensemble des antennes du réseau.

Cette liaison sera par exemple réalisée par un bus I2C. La technologie des équipements est une technologie à collecteur ouvert, qui permet l'addition de tous les signaux réponse transmis.

Ainsi, lorsqu'un objet portable détecté sur l'une quelconque des antennes, l'information est remontée directement à l'organe de gestion.

L'organe de gestion pourra connaître l'origine de l'information car chaque antenne et plus particulièrement, la logique L que chaque antenne comporte, permet de concaténer l'information d'identification desdites antennes aux messages émis en réponse aux signaux émis par l'organe de gestion.

A titre d'exemple, illustré par cette figure 4, l'antenne AN a détecté un objet portable A qui a été sélectionné par l'algorithme d'anticollision AL pour entrer en communication avec cet objet portable.

Ce deuxième mode de réalisation couvre les mêmes applications que le mode de réalisation représenté par la figure 3.

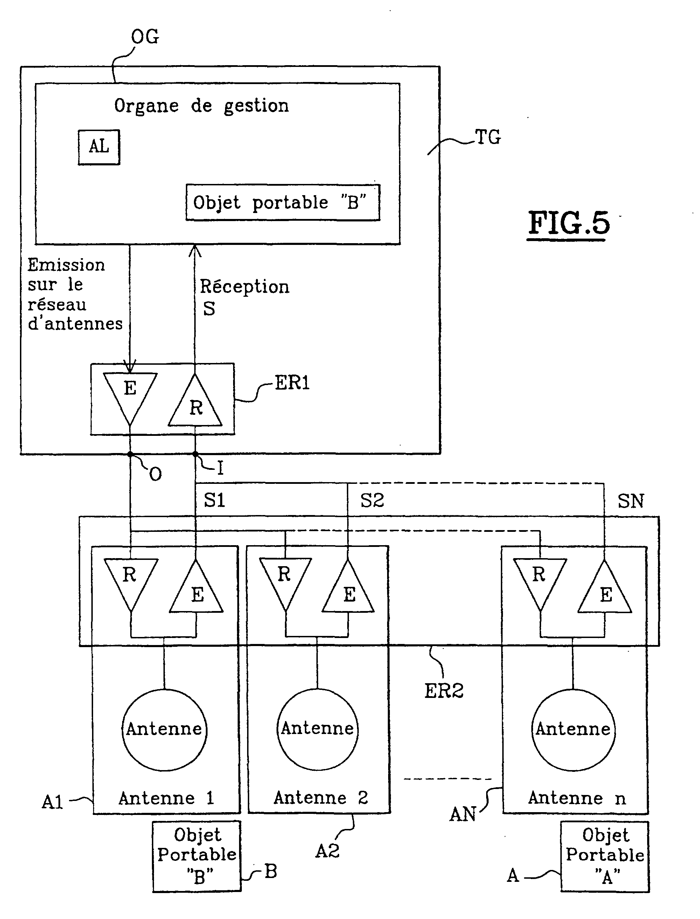

Un troisième mode de réalisation est illustré par le schéma de la figure 5.

Dans ce mode de réalisation on dispose du même type de liaison entre l'organe de gestion et le réseau d'antenne, c'est-à-dire une liaison de type transmission parallèle avec par exemple un bus I2C. L'équipement émission-réception ER1 de l'organe de gestion a une technologie de type à collecteur ouvert permettant l'addition de signaux réponse reçus sur l'entrée I de manière à fournir un signal résultant S à l'organe de gestion lui-même.

L'organe de gestion contient l'algorithme anticollision et l'intelligence permettant de traiter et d'analyser les informations reçues des objets portables.

De la même façon que dans les modes de réalisation décrits précédemment, cet organe interroge simultanément toutes les antennes du réseau pour détecter la présence d'un objet portable.

Ce mode de réalisation est particulièrement adapté dans le cas où il ne serait pas nécessaire de connaître l'origine de l'information des signaux reçus.

Il s'applique tout particulièrement dans les domaines d'applications tels que le péage autoroutier, les portiques antivol, l'horodatage (pointeuse horaire), parking et le comptage d'objets, etc.

Dans l'exemple qui est illustré sur cette figure 5, on voit qu'un objet portable B a été sélectionné sur une des antennes du réseau par l'algorithme anticollision AL.

Comme on vient de le voir, la gestion proposée par l'invention ne fait pas appel à la scrutation et présente les avantages suivants :
- le temps de réponse du système à la présentation d'un objet est indépendant du nombre d'antennes.
- la complexité de l'organe de gestion est indépendante du nombre d'antennes,
- tout type de l'algorithme anticollision peut être utilisé pour la mise en oeuvre de ce procédé,
- l'organe de gestion n'a pas besoin de connaître le nombre d'antennes installées dans le réseau,
- on peut supprimer totalement l'intelligence des antennes.

L'invention s'applique à tout type d'objets portables sans contact de type ISO14443-A et ISO14443-B, tags (étiquette électronique), fonctionnant à des fréquences de 13,56 MHz ou 125 kHz.

## Revendications

1. Procédé de détection d'objets portables à partir d'un réseau de N antennes, piloté par un organe de gestion centralisé, **caractérisé en ce qu'**il comporte les étapes suivantes :
- émission par l'organe de gestion de signaux simultanément vers toutes les antennes,
- réception par ledit organe d'un signal résultant comprenant des signaux réponse des antennes ayant détecté un objet portable,
- sélection successive de chaque objet détecté à partir de ce signal résultant, selon une séquence préétablie.

2. Procédé de détection selon la revendication 1, **caractérisé en ce que** la sélection successive de chaque objet est réalisée par la mise en oeuvre d'un algorithme d'anticollision.

3. Procédé de détection selon la revendication 1, **caractérisé en ce que** la réception du signal résultant par l'organe de gestion est obtenue par réception des signaux réponse des antennes respectivement sur le point d'entrée de l'organe réservé à chaque antenne et sommation desdits signaux.

4. Procédé de détection selon la revendication 1, **caractérisé en ce que** la réception d'un signal résultant par l'organe de gestion est obtenue par réception dudit signal résultant en un point d'entrée de l'organe réservé à l'ensemble des antennes du réseau.

5. Procédé de détection selon l'une quelconque des revendications précédentes, **caractérisé en ce que** la réception du signal résultant comporte une étape d'identification de l'origine des signaux réponse formant ledit signal résultant.

6. Procédé de détection selon les revendications 3 et 5 **caractérisé en ce que** l'identification d'un signal réponse comporte une étape de mémorisation de l'identification de l'antenne correspondante connue par le point d'entrée sur lequel est reçu le signal réponse.

7. Procédé de détection selon la revendication 6, **caractérisé en ce que** la mémorisation consiste à positionner une bascule dans un état logique et à la désactiver lorsque l'organe est entré en communication avec l'objet portable détecté par l'antenne correspondante.

8. Procédé de détection selon les revendications 4 et 5, **caractérisé en ce que** l'identification d'un signal réponse comporte une étape de concaténation de l'identification de l'antenne dans le signal réponse émis par l'antenne.

9. Système de détection d'objets portables comportant un réseau de N antennes associé à des moyens d'émission-réception et un organe de gestion centralisé, **caractérisé en ce que** :
- l'organe de gestion (OG) comporte :
- des moyens d'émission-réception (ER1) reliés aux moyens d'émission-réception des antennes,
- les moyens d'émission de l'organe de gestion étant aptes à émettre des signaux simultanément vers toutes les antennes,
- et les moyens de réception dudit organe étant aptes à recevoir les signaux réponse des antennes qui ont détecté un objet portable, sous la forme de signaux distincts pour chaque antenne ou d'un signal résultant, selon le type de liaison établie entre les moyens d'émission-réception de l'organe de gestion et les antennes
et,
- dés moyens pour sélectionner (AL) successivement chaque objet portable détecté selon une séquence préétablie.

10. Système de détection selon la revendication 9, **caractérisé en ce que** les moyens pour sélectionner successivement chaque objet portable détecté selon une séquence préétablie comportent un algorithme d'anticollision.

11. Système de détection selon la revendication 9 ou 10, **caractérisé en ce que** les moyens d'émission-réception de l'organe de gestion et les moyens d'émission-réception des antennes sont reliés en point à point (I1-IN) par des liaisons de type transmission série.

12. Système de détection selon la revendication 9 ou 10, **caractérisé en ce que** les moyens d'émission-réception de l'organe de gestion comportent un point d'entrée (I) relié à toutes les antennes par une liaison de type transmission série.

13. Système de détection selon la revendication 11, **caractérisé en ce que** l'organe de gestion comporte un discriminateur d'antenne (D).

## Patentansprüche

1. Durch ein zentralisiertes Verwaltungsorgan gesteuertes Feststellungsverfahren für tragbare Gegenstände ausgehend von einem Netz von N Antennen, **dadurch gekennzeichnet, dass** es die folgenden Stufen umfasst:
- gleichzeitige Ausgabe von Signalen an alle Antennen durch das Verwaltungsorgan,
- Empfang eines resultierenden Signals mit Antwortsignalen der Antennen, die einen tragbaren Gegenstand festgestellt haben, durch das genannte Organ,
- sukzessive Auswahl jedes ausgehend von diesem resultierenden Signal festgestellten Gegenstandes gemäß einer vorbestimmten Sequenz.

2. Feststellungsverfahren gemäß Anspruch 1, **dadurch gekennzeichnet, dass** die sukzessive Auswahl jedes Gegenstandes durch die Umsetzung eines Antikollisions-Algorithmus realisiert wird.

3. Feststellungsverfahren gemäß Anspruch 1, **dadurch gekennzeichnet, dass** der Empfang des resultierenden Signals durch das Verwaltungsorgan durch den Empfang der Antwortsignale der Antennen jeweils am Eingangspunkt des an jeder Antenne reservierten Organs und durch Summenbildung der genannten Signale erhalten wird.

4. Feststellungsverfahren gemäß Anspruch 1, **dadurch gekennzeichnet, dass** der Empfang eines resultierenden Organs durch das Verwaltungsorgan durch den Empfang des genannten resultierenden Signals an einem Eingangspunkt des an der Struktur der Antennen des Netzes reservierten Organs erhalten wird.

5. Feststellungsverfahren gemäß einem der vorherigen Ansprüche, **dadurch gekennzeichnet, dass** der Empfang des resultierenden Signals eine Identifizierungsstufe der Herkunft der das genannte resultierende Signal bildenden Antwortsignale umfasst.

6. Feststellungsverfahren gemäß Anspruch 3 und 5, **dadurch gekennzeichnet, dass** die Identifizierung eines Antwortsignals eine Speicherstufe der Identifizierung der entsprechenden bekannten Antenne durch den Eingangspunkt umfasst, an dem das Antwortsignal empfangen wird.

7. Feststellungsverfahren gemäß Anspruch 6, **dadurch gekennzeichnet, dass** die Speicherung in der Positionierung einer Kippschaltung in einem logischen Zustand und in der Deaktivierung besteht, wenn das Organ mit dem von der entsprechenden Antenne festgestellten tragbaren Gegenstand die Kommunikation aufgenommen hat.

8. Feststellungsverfahren gemäß Anspruch 4 und 5, **dadurch gekennzeichnet, dass** die Identifizierung eines Antwortsignals eine Verkettungsstufe der Identifizierung der Antenne im von der Antenne ausgegebenen Antwortsignal umfasst.

9. Feststellungssystem für tragbare Gegenstände mit einem Sender-Empfängermitteln zugeordneten Netz von N Antennen und einem zentralisierten Verwaltungsorgan, **dadurch gekennzeichnet, dass**:
- das Verwaltungsorgan (OG) Folgendes umfasst:
- mit den Sender-Empfängermitteln der Antennen verbundene Sender-Empfängermittel (ER1),
- wobei die Ausgabemittel des Verwaltungsorgans zum gleichzeitigen Senden von Signalen an alle Antennen geeignet sind,
- und wobei die Empfängermittel des genannten Organs zum Empfang der Antwortsignale der Antennen in Form von für jede Antenne unterschiedlichen Signalen oder eines resultierenden Signals - je nach Art der zwischen den Sender-Empfängermitteln des Verwaltungsorgans und den Antennen hergestellten Verbindung - geeignet sind, die einen tragbaren Gegenstand festgestellt haben
und
- Mittel zur sukzessiven Auswahl (AL) jedes gemäß einer vorbestimmten Sequenz festgestellten tragbaren Gegenstandes.

10. Feststellungssystem gemäß Anspruch 9, **dadurch gekennzeichnet, dass** die Mittel zur sukzessiven Auswahl jedes tragbaren Gegenstandes gemäß einer vorbestimmten Sequenz einen Antikollisions-Algorithmus umfassen.

11. Feststellungssystem gemäß Anspruch 9 oder 10, **dadurch gekennzeichnet, dass** die Sender-Empfängermittel des Verwaltungsorgans und die Sender-Empfängermittel der Antennen Punkt an Punkt (I1-IN) durch Verbindungen vom Typ Serienübertragung verbunden sind.

12. Feststellungssystem gemäß Anspruch 9 oder 10, **dadurch gekennzeichnet, dass** die Sender-Empfängermittel des Verwaltungsorgans einen mit allen Antennen durch eine Verbindung vom Typ Serienübertragung verbundenen Eingangspunkt (I) umfassen.

13. Feststellungssystem gemäß Anspruch 11, **dadurch gekennzeichnet, dass** das Verwaltungsorgan einen Antennendiskriminator umfasst.

## Claims

1. A method of detecting portable objects using a network of N antennas, controlled by a centralised management member, **characterised in that** it comprises the following steps:
- sending by the management member of signals simultaneously to all the antennas;
- receiving by said member of a resultant signal comprising response signals from the antennas that have detected a portable object;
- successive selection of each detected object from this resultant signal, according to a pre-established sequence.

2. A detection method according to Claim 1, **characterised in that** the successive selection of each object is carried out by the implementation of an anticollision algorithm.

3. A detection method according to Claim 1, **characterised in that** the receiving of the resultant signal by the management member is obtained by receiving of the response signals from the antennas respectively on the input point of the member reserved for each antenna and summation of said signals.

4. A detection method according to Claim 1, **characterised in that** the receiving of a resultant signal by the management member is obtained by receiving of said resultant signal at an input point of the member reserved for all the antennas in the network.

5. A detection method according to any one of the preceding claims, **characterised in that** the receiving of the resultant signal comprises a step of identifying the origin of the response signals forming said resultant signal.

6. A detection method according to Claims 3 and 5, **characterised in that** the identification of a response signal comprises a step of storing the identification of the corresponding antenna known by the input point on which the response signal is received.

7. A detection method according to Claim 6, **characterised in that** the storing consists of setting a latch in one logic state and deactivating it when the member has entered into communication with the portable object detected by the corresponding antenna.

8. A detection method according to Claims 4 and 5, **characterised in that** the identification of a response signal comprises a step of concatenating the identification of the antenna in the response signal sent by the antenna.

9. A system for detecting portable objects comprising a network of N antennas associated with sending/receiving means and a centralised management member, **characterised in that**:
- the management member (OG) comprises:
- sending/receiving means (ER1) connected to the sending/receiving means of the antennas;
- the sending means of the management member being capable of sending signals simultaneously to all the antennas;
- and the receiving means of said member being capable of receiving the response signals from the antennas that have detected a portable object, in the form of distinct signals for each antenna or a resultant signal, according to the type of connection established between the sending/receiving means of the management member and the antennas;
and
- means (AL) for successively selecting each detected portable object according to a pre-established sequence.

10. A detection system according to Claim 9, **characterised in that** the means for successively selecting each detected portable object according to a pre-established sequence comprise an anticollision algorithm.

11. A detection system according to Claim 9 or 10, **characterised in that** the sending/receiving means of the management member and the sending/receiving means of the antennas are connected in point-to-point (I1-IN) mode by serial transmission links.

12. A detection system according to Claim 9 or 10, **characterised in that** the sending/receiving means of the management member comprise an input point (I) connected to all the antennas by a serial transmission link.

13. A detection system according to Claim 11, **characterised in that** the management member comprises an antenna discriminator (D).
